# EUROPEAN PATENT APPLICATION

(11) **EP 4 393 731 A1**
(43) Date of publication of application: **03.07.2024**
(21) Application number: 23214498.0
(22) Date of filing: 06.12.2023
(51) Int. Cl.: B60C 23/04, B60C 19/00, B29D 30/00

(54) **TIRE ASSEMBLY**

(30) Priority: 26.12.2022 JP 2022208698
(71) Applicant: Sumitomo Rubber Industries, Ltd., Kobe-shi, Hyogo 651-0072 (JP); The School Corporation Kansai University, Suita-shi, Osaka 564-8680 (JP)
(72) Inventor: FUJIWARA, Takahiro, Kobe-shi, 651-0072 (JP); SUGIMOTO, Mutsuki, Kobe-shi, 651-0072 (JP); KURODA, Kenichi, Kobe-shi, 651-0072 (JP); SUGIOKA, Kyota, Kobe-shi, 651-0072 (JP); TANI, Hiroshi, Suita-shi, 564-8680 (JP)
(74) Representative: Manitz Finsterwald Patent- und Rechtsanwaltspartnerschaft mbB

(57) **Abstract**

A tire assembly includes a tire, a fixing member, and one or a plurality of functional members. The tire includes an attachment-receiving portion on an inside surface of the tire. The fixing member includes a body portion extending along a circumferential direction of the tire, and an attaching portion attachable to and detachable from the attachment-receiving portion. The one or plurality of functional members are configured to be fixed to the fixing member. The body portion includes at least one of metal, synthetic resin, or rubber.

## Description

### FIELD OF INVENTION

The present invention relates to a tire assembly in which a functional member is incorporated inside a tire.

### BACKGROUND

JP 2016-088473A discloses a tire assembly inside which a sensor device including an electronic device and an electrical power generation body integrated with the sensor device is incorporated. The electrical power generation body of JP 2016-088473A uses contact charging to convert mechanical energy, generated by deformation of a tire along with traveling of a vehicle, into electrical energy. The electrical power thus obtained is supplied to a battery mounted on the vehicle or used to drive electronics.

### SUMMARY OF INVENTION

According to JP 2016-088473A, the sensor device is stuck to the inside of the tire or embedded in the tire itself, to be integrated with the tire, forming the tire assembly. With this configuration, when the tire of the tire assembly reaches the end of its life, functional members such as the electrical power generation body and the sensor device are required to be replaced together with the tire, which leads to waste of resources still usable.

An object of the present invention is to provide a tire assembly that enables effective use of a functional member.

A tire assembly according to a first aspect of the present invention includes a tire, a fixing member, and one or a plurality of functional members. The tire includes an attachment-receiving portion on an inside surface of the tire. The fixing member includes a body portion extending along a circumferential direction of the tire, and an attaching portion attachable to and detachable from the attachment-receiving portion. The one or plurality of functional members are configured to be fixed to the fixing member. The body portion includes at least one of metal, synthetic resin, or rubber.

According to the tire assembly in accordance with the first aspect, the functional member is attachable to and detachable from the inside surface of the tire through the fixing member. Thus, it is possible to achieve reuse by detaching the fixing member including the functional member from the original tire.

A tire assembly according to a second aspect of the present invention is the tire assembly according to the first aspect, wherein at least one of the one or plurality of functional members is disposed between the body portion and the inside surface.

A tire assembly according to a third aspect of the present invention is the tire assembly according to the first aspect or the second aspect, wherein the body portion is formed in a ring shape extending along an entire circumference of the tire.

A tire assembly according to a fourth aspect of the present invention is the tire assembly according to any of the first to third aspects, wherein a circumferential length of the body portion is equal to a circumferential length of the inside surface.

A tire assembly according to a fifth aspect of the present invention is the tire assembly according to any of the first to fourth aspects, wherein the one or plurality of functional members are a plurality of functional members, and the plurality of functional members are provided. The plurality of functional members are arranged to cause total mass of the plurality of functional members to be distributed at equal intervals along the circumferential direction of the tire.

According to the fifth aspect, since the mass balance of the tire assembly is maintained symmetrically with respect to the rotational axis, it is possible to reduce application of unnecessary vibration during the rotation of the tire assembly.

A tire assembly according to a sixth aspect of the present invention is the tire assembly according to any of the first to fifth aspects, wherein the one or plurality of functional members are any of an electrical power generation device, a sensor device, a secondary battery, a capacitor, an antenna device, a transmitter, a processor, a memory, and a circuit.

A tire assembly according to a seventh aspect of the present invention is the tire assembly according to any of the first to sixth aspects, wherein each of the attachment-receiving portion and the attaching portion includes a surface fastener.

According to the seventh aspect, it is possible to easily attach and detach the functional member with a simple member.

A tire assembly according to an eighth aspect of the present invention is the tire assembly according to the seventh aspect, wherein at least one of the one or plurality of functional members is disposed between the surface fastener and the body portion.

According to the eighth aspect, it is possible to more reliably fix the functional member to the tire.

A tire assembly according to a ninth aspect of the present invention is the tire assembly according to any of the first to eighth aspects, wherein at least one of the one or plurality of functional members is an electrical power generation device including a first member and a second member. The first member includes a first insulating film forming a first surface. The second member includes a second insulating film forming a second surface, and the second surface faces the first surface and is configured to come into contact with the first surface. The first member and the second member are configured to cause an area of real contact between the first surface and the second surface to change in accordance with pressure applied to the first member and the second member. The first insulating film and the second insulating film are configured to cause one of the first insulating film and the second insulating film to be positively charged and to cause the other one of the first insulating film and the second insulating film to be negatively charged, when the area of real contact is caused to change.

When the tire assembly according to the ninth aspect is the tire assembly according to the eighth aspect, it is possible to further directly transmit deformation of the tire to the electrical power generation device, and it is possible to further increase the electrical power generation amount of the electrical power generation device. Further, it is possible to reduce a time during which the first surface and the second surface of the electrical power generation device are completely separated from each other due to the deformation of the tire. Accordingly, it is possible to further increase the total electrical power generation amount of the electrical power generation devices.

A tire assembly according to a tenth aspect of the present invention is the tire assembly according to any of the first to ninth aspects, wherein one of the first member and the second member is fixed to the surface fastener, and the other one of the first member and the second member is fixed to the body portion.

According to the tenth aspect, it is possible to more reliably fix the electrical power generation device to the tire. In addition, it is possible to reduce mutual displacement of positions of the first member and the second member.

A tire assembly according to an eleventh aspect of the present invention is the tire assembly according to any of the first to tenth aspects, wherein at least one of an opening, a notch, or a slit is formed in the body portion.

According to the eleventh aspect, it is possible to appropriately adjust the rigidity of the body portion, and it is possible to allow the body portion to easily follow deformation of the tire while maintaining strength necessary for the body portion.

A tire assembly according to a twelfth aspect of the present invention is the tire assembly according to the eleventh aspect, wherein at least one of the notch or the slit extends along a direction intersecting the circumferential direction of the tire.

A tire assembly according to a thirteenth aspect of the present invention is the tire assembly according to the fifth aspect, wherein at least one of the plurality of functional members is an electrical power generation device including a first member and a second member. The first member includes a first insulating film forming a first surface. The second member includes a second insulating film forming a second surface, and the second surface faces the first surface and is configured to come into contact with the first surface. The first member and the second member are configured to cause an area of real contact between the first surface and the second surface to change in accordance with pressure applied to the first member and the second member. The first insulating film and the second insulating film are configured to cause one of the first insulating film and the second insulating film to be positively charged and to cause the other one of the first insulating film and the second insulating film to be negatively charged, when the area of real contact is caused to change.

A tire assembly according to a fourteenth aspect of the present invention is the tire assembly according to the first aspect, wherein the body portion is a strip-shaped member extending partially along the circumferential direction.

A tire assembly according to a fifteenth aspect of the present invention is the tire assembly according to the fourteenth aspect, wherein each of the attachment-receiving portion and the attaching portion includes a surface fastener.

A tire assembly according to a sixteenth aspect of the present invention is the tire assembly according to the fifteenth aspect, wherein the body portion includes a first body portion to which the attaching portion is fixed, the first body portion being disposed on an outer side in a radial direction of the tire, and a second body portion disposed on an inner side in the radial direction of the tire, and the one or plurality of functional members are disposed between the first body portion and the second body portion.

A tire assembly according to a seventeenth aspect of the present invention is the tire assembly according to the sixteenth aspect, wherein a length of the attaching portion along the circumferential direction is longer than a length of the second body portion along the circumferential direction.

A tire assembly according to an eighteenth aspect of the present invention is the tire assembly according to the seventeenth aspect, wherein a length of the attachment-receiving portion along the circumferential direction is longer than the length of the attaching portion along the circumferential direction.

According to the eighteenth aspect, it is possible to easily attach and detach the fixing member. Further, it is possible to reduce the weight of the fixing member.

According to the present invention, a tire assembly that enables effective use of a functional member is provided.

### BRIEF DESCRIPTION OF DRAWINGS

FIG. 1 is a perspective view showing an overall configuration of a tire assembly according to an embodiment;
FIG. 2 is a longitudinal cross-sectional view of a tire;
FIG. 3 is a perspective view showing an overall configuration of a fixing member according to the embodiment;
FIG. 4 is a developed view of a body portion according to the embodiment;
FIG. 5 is a view showing an example of an electrical power generation device;
FIG. 6 is a longitudinal cross-sectional view of a tire assembly according to a variation;
FIG. 7A is an enlarged view of a relevant part of a body portion according to a variation;
FIG. 7B is an enlarged view of a relevant part of a body portion according to a variation;
FIG. 7C is an enlarged view of a relevant part of a body portion according to a variation;
FIG. 7D is an enlarged view of a relevant part of a body portion according to a variation;
FIG. 8A is a plan view of a body portion according to a variation;
FIG. 8B is a plan view of a body portion according to a variation;
FIG. 8C is a plan view of a body portion according to a variation;
FIG. 9A is a side cross-sectional view of a tire assembly according to a variation;
FIG. 9B is a developed view of the tire assembly according to the variation in FIG. 9A;
FIG. 10 is a schematic view of a fixing member according to examples;
FIG. 11 is a graph showing an experiment result;
FIG. 12A is a graph showing an experiment result;
FIG. 12B is a graph showing an experiment result; and
FIG. 13 is a graph showing an experiment result.

### DETAILED DESCRIPTION OF THE PREFERRED EMBODIMENTS

A tire assembly according to an embodiment of the present invention will be described below with reference to the drawings.

### 1. Overall configuration

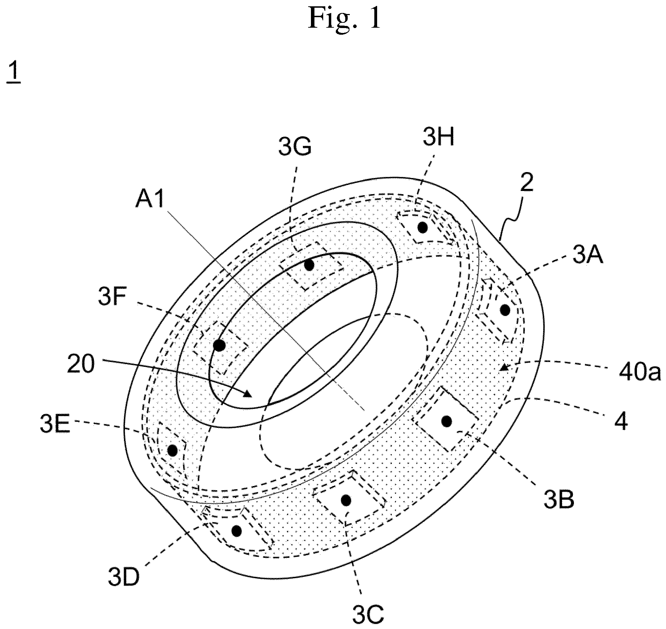

FIG. 1 is a perspective view showing an overall configuration of a tire assembly 1 according to an embodiment of the present invention. The tire assembly 1 is a tire product having an additional function such as a sensing function, an electrical power generation function, or a signal transmission function. The tire assembly 1 is mounted on a wheel of each of various vehicles, and is configured to rotate on a road surface. As shown in FIG. 1, the tire assembly 1 includes a tire 2, a fixing member 4, and functional members 3A to 3H. The fixing member 4 extends along a circumferential direction of the tire 2, and can be detachably fixed to an inside surface 20 of the tire 2. Each of the functional members 3A to 3H is fixed to the fixing member 4, and at least one of the functional members 3A to 3H is disposed between the inside surface 20 and an outer circumferential surface 40a of the fixing member 4. Each member will be described below.

### 2. Configuration of each member

### [Tire]

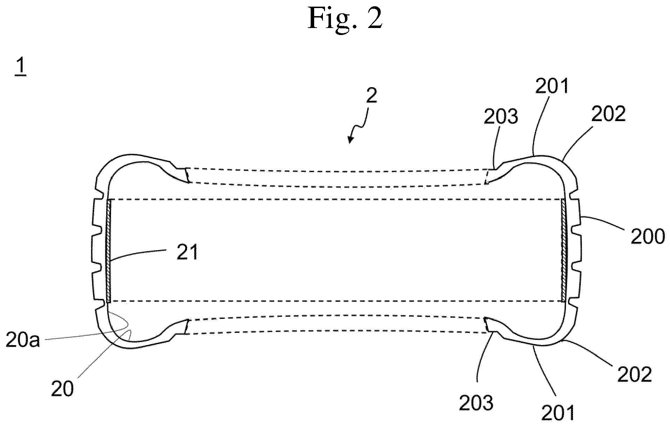

FIG. 2 is a longitudinal cross-sectional view of the tire 2 (a cross-sectional view of a cross section along a radial direction of the tire assembly 1). The tire 2 is formed of vulcanized rubber and the like, and has elasticity. The type and structure of the tire 2 are not particularly limited. The tire 2 of the present embodiment includes a tread portion 200, sidewall portions 201, shoulder portions 202, and bead portions 203, as shown in FIG. 2. The tread portion 200 is a portion that defines a side circumferential surface of the tire assembly 1, and is adapted to come into contact with the road surface to generate friction, thereby moving a vehicle forward. The sidewall portions 201 are flexed in order to absorb a shock from the road surface, causing flexure. The shoulder portions 202 are portions continuous with the tread portion 200 and the sidewall portions 201. The bead portions 203 are portions fixed to a wheel rim, and include bead wires (not shown) embedded therein. The tire 2 further includes the inside surface 20 that defines an inside space of the tire 2. An annular surface of the inside surface 20 corresponding to the back side of the tread portion 200 may be referred, below, to as an inside surface 20a to be distinguished from other portions of the inside surface 20.

The tire 2 includes an attachment-receiving portion on the inside surface 20a for allowing attachment of the fixing member 4. In the present embodiment, the attachment-receiving portion includes a surface fastener 21 extending along the circumferential direction of the tire 2. The surface fastener 21 is fixed on the inside surface 20a at a position corresponding to a position of a surface fastener 41 of the fixing member 4 to be described later, and this allows the fixing member 4 to be detachably fixed to the inside surface 20a. In the present embodiment, the surface fastener 21 is fixed on the inside surface 20a so as to extend along the entire circumference of the tire 2.

The surface fastener 21 and the surface fastener 41 are not particularly limited as long as they are fasteners that are attachable and detachable using their surfaces. For example, one of the fasteners may include hook-shaped raised portions and the other fastener may include loop-shaped raised portions, each of the fasteners may include both hook-shaped raised portions and loop-shaped raised portions, or the fasteners may be coupled by being formed in other shapes. However, a material forming the surface fastener 21 and the surface fastener 41 preferably has heat resistance, in consideration of the inside environment of the tire 2. A method of attaching the surface fastener 21 on the inside surface 20a is not particularly limited, and examples thereof include a method using an adhesive, and a method using a pressure-sensitive adhesive.

### [Fixing member]

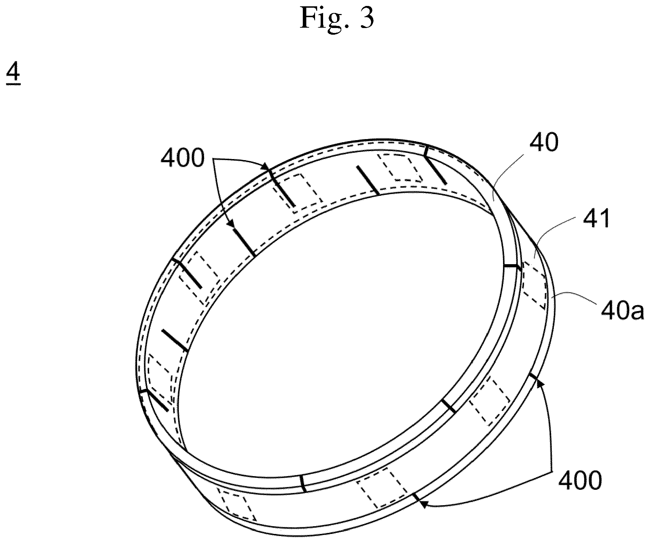

FIG. 3 is a perspective view showing an overall configuration of the fixing member 4 according to the present embodiment. The fixing member 4 is a member for allowing the functional members, described later, to be attached to and detached from the tire 2, and includes a body portion 40 and an attaching portion. The body portion 40 is a portion extending along the circumferential direction of the tire 2. The body portion 40 can be formed of, for example, a thin strip-shaped member having a longer-side direction along the circumferential direction of the tire 2 and a width direction orthogonal to the longer-side direction. The body portion 40 may extend partially along the circumferential direction of the tire 2, or may extend along the entire circumference of the tire 2. The body portion 40 of the present embodiment extends along the entire circumference of the tire 2, and is formed in a ring shape by connecting both ends in the longer-side direction of the body portion 40. When the circumferential length of the inside surface 20a is L2, the circumferential length L1 of the outer circumferential surface 40a of the body portion 40 is preferably 0.98×L2 or more and 1.02×L2 or less, more preferably 0.99×L2 or more and 1.01×L2 or less, and still more preferably equal to L2 (the error is within ±0.5% of L2).

In the body portion 40, as a type formed therein, at least one of an opening, a notch, or a slit is preferably formed, within a range allowing strength necessary for the fixing member 4 to be maintained. Each of the opening and the notch can be formed by cutting out a part of a member forming the body portion 40. The slit can be formed by making an incision inward from an outer edge of the body portion 40. Two or more types of the opening, the notch, and the slit may be formed in the body portion 40. The formation of at least one of the opening, the notch, or the slit in the body portion 40 relaxes the rigidity of the body portion 40 in the periphery thereof. As a result, the body portion 40 easily follows deformation of the tire 2 due to air pressure or due to a shock. In particular, when the opening or the notch is formed, a surface area in a thickness direction of the body portion 40 increases to improve the heat dissipation performance. Thus, this reduces an excessive increase in the temperature of the body portion 40 due to heat or the like generated by running of the tire assembly 1, thereby reducing an influence on functions of the functional members 3Ato 3H.

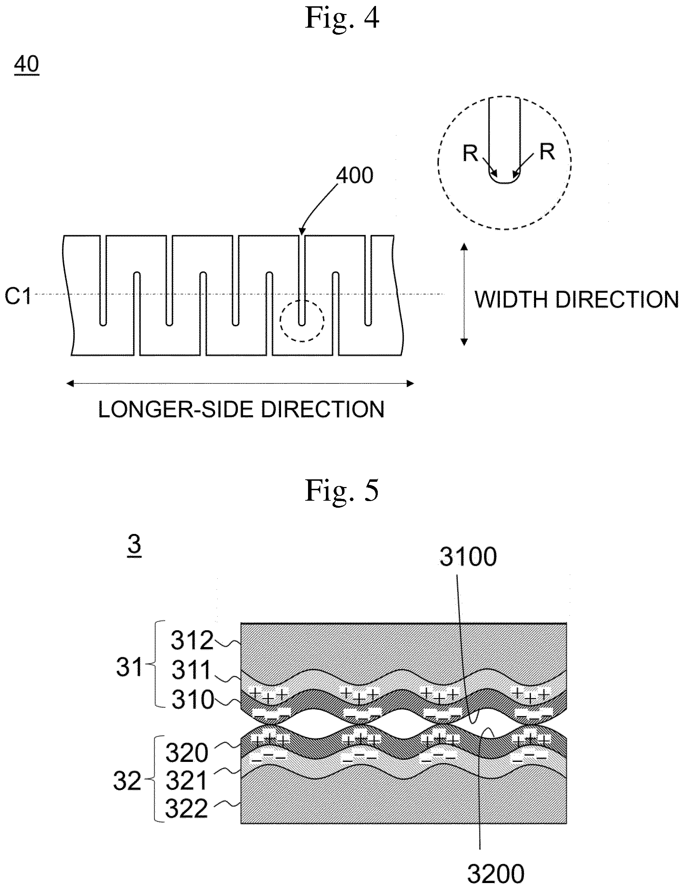

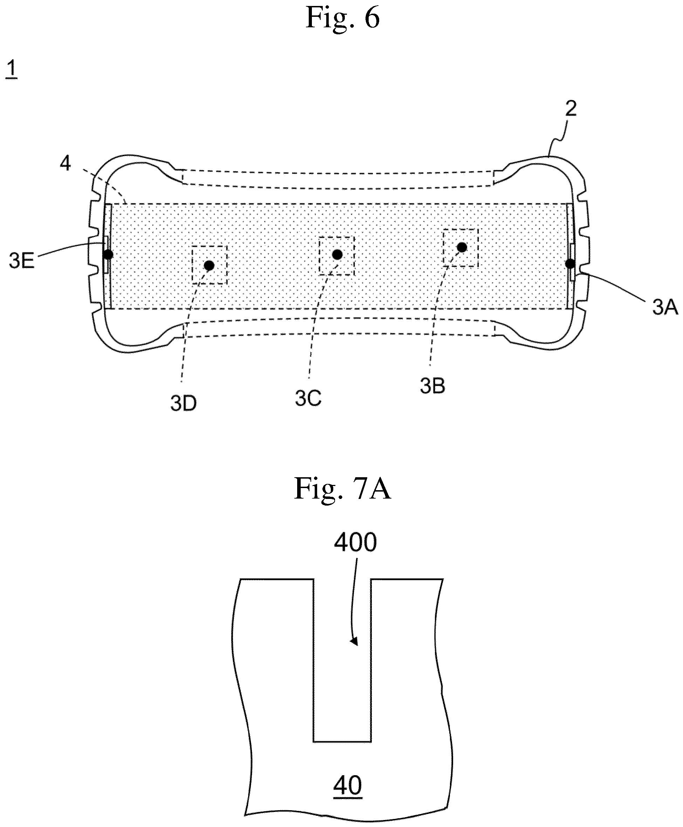

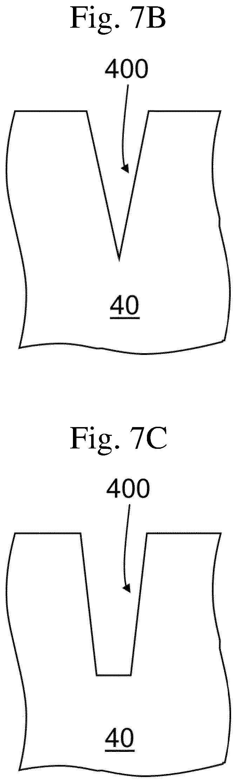

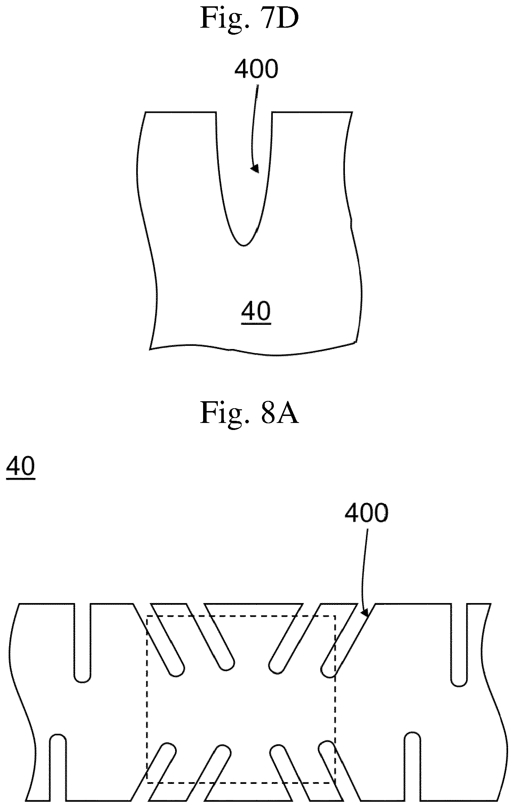

FIG. 4 is a developed view of the body portion 40 according to the present embodiment. In this example, notches 400, which extend along the width direction of the body portion 40, and which extend so as to intersect the circumferential direction of the tire 2, are formed in a staggered pattern in the width direction while being formed at regular intervals along the longer-side direction (in the drawing, the reference sign is assigned to only a representative one). As shown in FIG. 4, the notch 400 preferably has roundness (rounded shapes: R) at corners closer to the width-directional center C1. When the corner is not rounded, the vicinity of the corner is easily damaged if the body portion 40 is deformed along with deformation of the tire 2 because stress concentrates on the corner. In contrast, when the corner is rounded, concentration of stress is reduced to reduce an occurrence of damage in the body portion 40. However, as will be described later, the shape or the like of the notch 400 can be changed as appropriate (see FIGS. 7A to 7D). Positions and intervals at which the notches 400 are formed, the number of notches 400 formed, and the size and the shape of the notch 400 are not particularly limited, and can be changed as appropriate in consideration of the rigidity and the heat dissipation performance of the body portion 40, a disposition relationship with the functional members, and the like. The above similarly applies to a case in which an opening or a slit is formed in the body portion 40.

Reference is made again to FIG. 3. At least one functional member is fixed on the outer circumferential surface 40a of the body portion 40, whereby when the fixing member 4 is attached to the tire 2, the at least one functional member is positioned and fixed between the inside surface 20a and the fixing member 4. In FIG. 3, for reference, positions at which the functional members 3A to 3H according to the present embodiment are fixed are indicated by dashed lines. In the present embodiment, the plurality of functional members 3Ato 3H are fixed on the outer circumferential surface 40a so as to be arranged at equal intervals along the circumferential direction of the tire 2. The reason for arranging the plurality of functional members 3A to 3H in this manner will be described later. Note that the functional members 3A to 3H may be undetachably fixed to the body portion 40.

A material forming the body portion 40 is not particularly limited, and can be, for example, a material including at least one of metal, synthetic resin, or rubber. However, examples of the synthetic resin and the rubber exclude a sponge material obtained by foaming the synthetic resin or the rubber, and a three-dimensional structural body formed by aggregating fibrous members including the synthetic resin or the rubber. Examples of types of the metal include stainless steel (SUS), carbon steel, aluminum, copper, brass, iron, and other types of metal such as alloy. These types of metal may be spring materials. Examples of the synthetic resin include polypropylene (PP), polyethylene (PE), engineering plastics such as polyethylene terephthalate (PET), polycarbonate (PC), and polyether ether ketone (PEEK), and fiber reinforced plastics (FRPs).

When the body portion 40 is formed of stainless steel, the thickness of the body portion 40 is preferably 0.3 mm or less, and more preferably 0.25 mm or less. When the body portion 40 is formed of synthetic resin, the thickness of the body portion 40 is preferably 0.5 mm or more and 3 mm or less.

The attaching portion is a portion that is attachable to and detachable from the attachment-receiving portion. In the present embodiment, the attaching portion includes the surface fastener 41 that can be coupled to the surface fastener 21, as described above. In the present embodiment, the surface fastener 41 is fixed to the body portion 40 so as to extend over the entire circumference of the outer circumferential surface 40a. Accordingly, when the fixing member 4 is attached to the tire 2, it is not necessary to adjust positions of the surface fastener 41 and the surface fastener 21, thereby facilitating the attachment. In addition, when the functional members are disposed such that at least one of the functional members is sandwiched between the outer circumferential surface 40a and the surface fastener 41, the functional member can be more firmly fixed to the fixing member 4.

When the body portion 40 has a ring shape, the mass of the fixing member 4 including the attaching portion is preferably kept within a range in which running performance of the tire assembly 1 can be maintained, and is preferably, for example, 500 g or less although it depends on the size of the tire 2 or a material forming the body portion 40.

### [Functional member]

The tire assembly 1 includes one or a plurality of functional members fixed to the fixing member 4. The tire assembly 1 of the present embodiment includes the eight functional members 3A to 3H, but the number of functional members is not particularly limited. Regarding the functional members, at least one of the functional members is required to be disposed between the body portion 40 and the inside surface 20a. In the present embodiment, seven functional members 3A to 3G are electrical power generation devices 3 to be described later, and are disposed between the body portion 40 and the inside surface 20a. One functional member 3H is a circuit to be described later, and is disposed on an inner circumferential surface of the body portion 40. Each of the functional members 3A to 3G is fixed to at least one of the outer circumferential surface 40a or the back surface of a coupling surface of the surface fastener 41. A method of fixing the functional members 3A to 3H is not particularly limited, and examples thereof include a method using an adhesive and a method using an adhesive tape.

The functional members 3A to 3H may be any of an electrical power generation device, a sensor device, a secondary battery, a capacitor, an antenna device, a transmitter, a processor, a memory, and a circuit. That is, the functional members 3A to 3H may include two or more functional members of the same type, and are not necessarily required to include all types of the functional members described above. Each functional member will be described below.

The electrical power generation device is not particularly limited as long as the electrical power generation device generates electrical power using deformation of the tire 2. The electrical power generation device may be a device using a piezoelectric element, a device for generating electrical power using contact charging, or the like. An example of the device for generating electrical power using contact charging is the electrical power generation device 3 that includes a first surface formed of an insulating material and a second surface formed of an insulating material different from that of the first surface, and that generates an electrical potential difference due to a change in an area of real contact between the first surface and the second surface. The tire assembly 1 preferably includes at least one electrical power generation device 3 of this type. Details of the electrical power generation device 3 will be described later.

When the tire assembly 1 includes the secondary battery or the capacitor as another functional member, electricity generated in the electrical power generation device may be stored in the secondary battery or the capacitor. When the tire assembly 1 includes each of electronics such as the sensor device, the antenna device, the transmitter, the processor, or the memory as another functional member, electricity generated in the electrical power generation device may be appropriately supplied to these electronics. The electrical power generation device generates electrical power in conjunction with the rotation of the tire 2. Thus, by detecting a change in an electrical potential difference generated in the electrical power generation device, this also allows use as a sensor for monitoring at least one of a rotational speed of the tire, a wear state of the tire, a state of a road surface, or a ground-contact state.

The sensor device is not particularly limited as long as the sensor device acquires sensing data inside the tire assembly 1, and may be, for example, an air pressure sensor, a temperature sensor, a speed sensor, an acceleration sensor, a rotational speed sensor, a rotational angle sensor, or the like. In a case where the sensor device is disposed between the tire 2 and the fixing member 4, more accurate sensing data can be acquired as compared with that in a case where the sensor device is disposed on the inner side of the fixing member 4. When the tire assembly 1 includes the processor as another functional member, the sensing data acquired by the sensor device may be processed by the processor to be processed data. When the tire assembly 1 includes the memory as another functional member, the sensing data acquired by the sensor device or the processed data thereof may be stored in the memory. When the tire assembly 1 includes the antenna device as another functional member, the sensing data acquired by the sensor device or the processed data thereof may be transmitted to a device outside the tire assembly 1, such as an in-vehicle device, via the antenna device.

The processor is not particularly limited as long as the processor, for example, executes a program, calculates, converts, processes, and transmits and receives data, and controls an operation of another functional member. As hardware, the processor is configured, for example, as an integrated circuit (IC) chip including a calculation unit, a register, a peripheral circuit, and the like. The processor may, for example, distribute electricity generated in the electrical power generation device, and receive data from an external device via the antenna device, in addition to generation of the processed data or transmission of the data, described above.

The memory is not particularly limited as long as the memory has a data storage area, and as hardware, the memory is configured as, for example, a flash memory chip. The memory may be a non-volatile rewritable memory, a non-rewritable memory that stores a program or the like, or a volatile memory for temporarily storing data.

The secondary battery is not particularly limited as long as the secondary battery is a battery that can be repeatedly used by charging. The secondary battery may be, for example, a lithium-ion battery, a lithium battery, an alkaline storage battery, a silver oxide-zinc storage battery, an all-solid-state battery, or the like. The secondary battery can be used to supply electricity to the electronics described above.

The capacitor is not particularly limited, and any capacitor can be used. The capacitor may be used so as to store electricity generated in the electrical power generation device as necessary, or supply electricity to the electronics described above, and may also be used to maintain a constant voltage, or reduce noise.

The antenna device is not particularly limited as long as the antenna device transmits and receives a radio wave, and any antenna device can be used. The antenna device may include a communication device for establishing wireless communication between the tire assembly 1 and an external device of the tire assembly 1, in addition to an antenna itself that mutually converts a radio wave and an electrical current.

The transmitter is not particularly limited as long as the transmitter transmits a radio wave. The transmitter may be, for example, a Bluetooth (registered trademark) transmitter, a position information transmitter that transmits position information acquired from a satellite positioning system such as a global positioning system (GPS) to an external device, or the like.

The circuit may be a circuit for operating another functional member or a circuit for operating other functional members in cooperation with each other, and the configuration thereof is not particularly limited. When the electrical power generation device is used as the sensor for monitoring at least one of the rotational speed of the tire, the wear state of the tire, the state of the road surface, or the ground-contact state, the circuit may be a measurement circuit for measuring a time-series voltage, electrical current, or electrical power generation amount of the electrical power generation device.

At least some of the functional members 3A to 3H may be electrically connected to each other by using lead wire or the like (not shown). However, from a viewpoint of reducing vibration and noise of the tire assembly 1, the mass of the lead wire or the like to be used is preferably sufficiently smaller than each of the respective masses of the functional members 3A to 3H.

### [Electrical power generation device using contact charging]

FIG. 5 is a cross-sectional view showing a configuration of the electrical power generation device 3 according to the present embodiment. As shown in FIG. 5, the electrical power generation device 3 includes a first member 31 and a second member 32, and has a configuration in which the members are layered in this order. The electrical power generation device 3 of the present embodiment has a rectangular shape in plan view, but the shape of the electrical power generation device 3 is not limited to this shape.

The first member 31 includes a first substrate 312, a first electrode 311, and a first insulating film 310. Each of these elements has a rectangular shape in plan view, and these elements are layered in this order from an outer side toward the inner side of the electrical power generation device 3. The first substrate 312 is formed of a flexible material or a viscoelastic material, such as resin or an elastomer, in order to be deformable by receiving an external force. A large number of recesses and protrusions are formed on a surface of the first substrate 312 on a side in contact with the first electrode 311. As a result, recesses and protrusions corresponding to the recesses and protrusions of the first substrate 312 are reproduced on a first surface 3100 formed by the first insulating film 310 through the first electrode 311.

The configuration of the recesses and protrusions of the first substrate 312 is not particularly limited. For example, the recesses and protrusions may be formed in an orderly manner over a surface direction of the first substrate 312, or may be formed in a random manner to some extent. The cross-sectional shape of the recesses and protrusions is also not particularly limited.

The first electrode 311 is a portion for extracting electrical charge generated in the first insulating film 310 to the outside of the electrical power generation device 3, and is disposed so as to be in contact with the first insulating film 310 in the back side of the first surface 3100. The first electrode 311 can be formed of a material having electrically conductive property, and examples of such a material include an electrically conductive film of Ag, Cu, or the like, and an electrically conductive cloth. The configuration of the electrically conductive cloth is not particularly limited, and the electrically conductive cloth may be an electrically conductive cloth formed by plating an organic fiber fabric formed of a polymer material with metal, an electrically conductive cloth formed by mixing fibers formed of a polymer material with metal fibers, or the like. The first electrode 311 has flexibility, and can follow deformation of the first substrate 312 to be deformable. The first electrode 311 reproduces the recesses and protrusions corresponding to the recesses and protrusions of the first substrate 312 on a surface of the first electrode 311 in contact with the first insulating film 310.

The first insulating film 310 is a film formed of an insulator, and has flexibility. In the present embodiment, a surface of the first insulating film 310 opposite to the first electrode 311 corresponds to the first surface 3100. On the first surface 3100, the recesses and protrusions corresponding to the recesses and protrusions of the first substrate 312 are formed by the first substrate 312. The first surface 3100 faces a second surface 3200 formed by a second insulating film 320 to be described later, and is in contact with the second surface 3200. When an area of real contact or a real contact area, which is a substantive area of contact between the first surface 3100 and the second surface 3200, changes due to pressure applied to the electrical power generation device 3, the first insulating film 310 is charged to a polarity opposite to that of the second insulating film 320. That is, when the second insulating film 320 is positively charged, the first insulating film 310 is negatively charged. When the second insulating film 320 is negatively charged, the first insulating film 310 is positively charged.

The ten-point average roughness of the first surface 3100 is preferably 100 µm or more and 2 mm or less. Note that the method of measuring the ten-point average roughness conforms to JIS B 0601: 2001.

A case where the first surface 3100 and the second surface 3200 "come into contact" includes a case where the first surface 3100 and the second surface 3200 are partially in contact with each other and there is a portion in which the first surface 3100 and the second surface 3200 are not in contact with each other. The electrical power generation device 3 of the present embodiment is configured such that both the first surface 3100 and the second surface 3200 have a rectangular shape and entirely overlap with each other. That is, in the electrical power generation device 3 of the present embodiment, one surface of the first insulating film 310 and one surface of the second insulating film 320 entirely come into contact with each other.

The second member 32 includes a second substrate 322, a second electrode 321, and the second insulating film 320. Each element of the second member 32 has a rectangular shape in plan view, and the elements are layered in this order from an outer side toward the inner side of the electrical power generation device 3. The configuration of the second substrate 322 and the configuration of the second electrode 321 are the same as the configuration of the first substrate 312 and the configuration of the first electrode 311, respectively, and thus the repeated description thereof will be omitted.

The second insulating film 320 is a film formed of an insulator different from that of the first insulating film 310, and has flexibility. In the present embodiment, a surface of the second insulating film 320 opposite to the second electrode 321 corresponds to the second surface 3200. On the second surface 3200, recesses and protrusions corresponding to recesses and protrusions of the second substrate 322 are formed by the second substrate 322. The second surface 3200 faces the first surface 3100 formed by the first insulating film 310, and is in contact with the first surface 3100. When the area of real contact described above changes due to the pressure applied to the electrical power generation device 3, the second insulating film 320 is charged to a polarity opposite to that of the first insulating film 310.

The ten-point average roughness of the second surface 3200 is preferably 100 µm or more and 2 mm or less. Note that the method of measuring the ten-point average roughness conforms to JIS B 0601: 2001.

Each material forming a corresponding one of the first insulating film 310 and the second insulating film 320 can be selected from the group consisting of, for example, diamond-like carbon (DLC), perfluoropolyether, polymethylmethacrylate, nylon, polyvinyl alcohol, polyester, polyisobutylene, polyurethane (PU), polyethylene terephthalate, polyvinyl butyral, polychloroprene, natural rubber, polyacrylonitrile, polycarbonate made from diphenyl carbonate, polyether chloride, polyvinylidene chloride, polystyrene, polyethylene, polypropylene, polyimide, polyvinyl chloride, polydimethylsiloxane, polytetrafluoroethylene, a tetrafluoroethylene and hexafluoropropylene copolymer, a tetrafluoroethylene-hexafluoropropylene copolymer (FEP), and another material containing a fluorocarbon organic substance as a main component. From a viewpoint of increasing the electromotive force of the electrical power generation device 3, a pair of materials that are more distant from each other on the triboelectric series are preferably selected among the groups described above.

From a viewpoint of improving the electrical power generation amount of the electrical power generation device 3, the electrical power generation device 3 is preferably disposed between the inside surface 20a and the body portion 40, and more preferably, the electrical power generation device 3 is disposed between the outer circumferential surface 40a and the surface fastener 41. As a result, it is possible to reduce positional displacement of the second member 32 in a surface direction with respect to the first member 31, and it is also possible to apply a force in a direction of pressing the first member 31 against the second member 32, thereby enabling facilitation of efficient electrical power generation. The orientation of the electrical power generation device 3 in the tire assembly 1 is not particularly limited. The first member 31 may be disposed on the outer side in the radial direction and the second member 32 may be disposed on the inner side in the radial direction, or the first member 31 may be disposed on the inner side in the radial direction and the second member 32 may be disposed on the outer side in the radial direction. That is, the first member 31 of the electrical power generation device 3 may be fixed on the outer circumferential surface 40a while the second member 32 may be fixed on the back surface of the surface fastener 41, or the first member 31 may be fixed on the back surface of the surface fastener 41 while the second member 32 may be fixed on the outer circumferential surface 40a.

### 3. Arrangement of functional members

If mass balance along the circumferential direction of the tire is greatly lost by providing the functional members inside the tire, unnecessary vibration may occur along with the rotation of the tire to disturb comfortable traveling of the vehicle. Primary radial force variation (RFV) mainly contributes to this vibration. In the tire assembly 1, in order to reduce the vibration due to the radial force variation, the functional members are preferably arranged such that the total mass of the functional members is distributed at equal intervals as much as possible, and as evenly as possible, along the circumferential direction of the tire 2. In the present embodiment, the functional members 3A to 3H are thus arranged such that the centers of gravity of the functional members 3A to 3H are arranged at intervals of 45 degrees in the circumferential direction of the tire 2 with reference to a central axis A1 of the tire 2 (for convenience of description, the positions of the centers of gravity of the functional members 3A to 3H are indicated by black dots in FIG. 1). However, each of the intervals with reference to the central axis A1 may include an error within ±10 degrees. That is, a case where the mass of the plurality of functional members is "distributed at equal intervals" along the circumferential direction of the tire includes a case where the centers of gravity of the functional members are arranged at intervals each including an error within ±10 degrees, in addition to a case where the centers of gravity of the functional members are arranged at intervals of even angles.

In addition, in order to distribute the total mass of the functional members as evenly as possible, a difference in mass between the functional members in the distributed arrangement is preferably reduced as smaller as possible. Further, in order to reduce the vibration of the tire assembly 1 due to a higher-order component of the radial force variation, the mass itself of each of the functional members is preferably also small. Specifically, the mass of each functional member is preferably 40 g or less, more preferably 30 g or less, and still more preferably 20 g or less.

### 4. Features

In the tire assembly 1 of the present embodiment, the functional members 3A to 3H are detachably attached to the tire 2 through the fixing member 4. As a result, even when replacement of the tire 2 is required, the fixing member 4 and the functional members 3A to 3H can be reused for a new tire 2. Thus, it is possible to effectively use the resources.

In the tire assembly 1 of the present embodiment, the fixing member 4, accounting for a relatively large mass proportion in the tire assembly 1, is formed in a ring shape. Thus, the mass balance of the tire 2 is hardly lost, and the vibration due to the arrangement of the functional members 3A to 3H inside the tire 2 can be reduced. In addition, the attaching portion attached to the tire 2 is also formed in a ring shape. Thus, the vibration is further reduced, and attachment to the tire 2 and adjustment of the number of functional members are easily performed. Further, lightweight surface fasteners form the attachment-receiving portion and the attaching portion, and this reduces an adverse effect on the mass balance. In addition, in the tire assembly 1 of the present embodiment, the plurality of functional members 3A to 3H are arranged at equal intervals along the circumferential direction of the tire 2, and the total mass of the plurality of functional members 3Ato 3H is arranged so as to be evenly distributed (including a case of being substantially evenly distributed) along the circumferential direction of the tire 2. As a result, the mass imbalance caused by providing the functional members in the tire 2 is reduced, and occurrence of unnecessary vibration in the tire assembly 1 is reduced.

In the tire assembly 1 of the present embodiment, the functional members 3A to 3G are accommodated between the outer circumferential surface 40a and the surface fastener 41. As a result, the functional members 3Ato 3G are more reliably fixed by the fixing member 4, and are less likely to fall off from the fixing member 4. In addition, the functional members 3Ato 3G are the electrical power generation devices 3, in the present embodiment. Thus, even when the first member 31 and the second member 32 of each of the electrical power generation devices 3 are completely separated from each other, a force easily acts in a direction of pressing the first surface 3100 against the second surface 3200. Therefore, it is possible to reduce a time during which the first member 31 and the second member 32 are completely separated from each other, and it is possible to improve the electrical power generation amount of the electrical power generation device 3.

In the tire assembly 1 of the present embodiment, the notches 400 are formed in the body portion 40 of the fixing member 4. This facilitates adjustment of the rigidity of the body portion 40, and it is possible to improve performance to follow deformation of the tire 2. In addition, it is also possible to improve heat dissipation performance, and it is possible to reduce an undesirable influence on the functional members 3A to 3H due to heat along with running, or the like of the tire assembly 1.

### 5. Variations

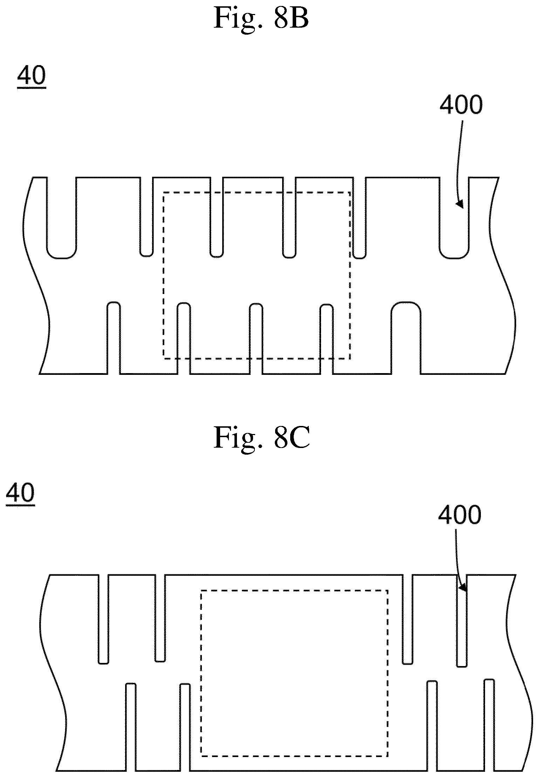

Although an embodiment of the present invention has been described above, the present invention is not limited to the above embodiment, and various modifications can be made without departing from the gist of the present invention. The followings are examples of modifications that can be made. The spirits of the following variations can be combined as appropriate.
(1) The functional members 3A to 3H are simply required to be arranged such that the respective centers of gravity of the functional members 3A to 3H are distributed at equal intervals along the circumferential direction of the tire 2. Thus, as shown in FIG. 6, the positions of the centers of gravity of the functional members along the width direction (direction parallel to the central axis A1) of the tire 2 may be different from each other. In addition, the number of functional members and the combination of functions can be changed as appropriate.
(2) The attachment-receiving portion of the tire 2 and the attaching portion of the fixing member 4 may include a member other than the surface fastener 21 and a member other than the surface fastener 41, respectively. In an example, the attachment-receiving portion and the attaching portion can include a pair of magnets, a pair formed of a magnet and a magnetic body, a pair of snap buttons, or the like. Another example may have the following configuration. That is, the attachment-receiving portion includes one or a plurality of protrusions protruding from the inside surface 20 toward the inside space, and the attaching portion includes one or a plurality of through-holes corresponding to the one or plurality of protrusions. Each of the one or plurality of protrusions is caused to pass through a corresponding one of the one or plurality of through-holes to fix the fixing member 4 to the tire 2. Still another example may have the following configuration. That is, the attachment-receiving portion includes a plurality of recesses recessed from the inside surface 20 toward an inner portion of the tire 2, and the attaching portion includes a plurality of protrusions protruding outward in the radial direction from the outer circumferential surface 40a and having a shape fitted into the plurality of recesses. Each of the protrusions is fitted into a corresponding one of the recesses to fix the fixing member 4 to the tire 2. In yet another example, one of the attachment-receiving portion and the attaching portion may include an adhesive tape that can be stuck again after being removed, and the other one may include a surface to which the adhesive tape is stuck. Alternatively, the surface fastener 41 is not necessarily required to be continuous in a ring shape, and may be fixed to the body portion 40 while being interrupted. Similarly, the surface fastener 21 is not necessarily required to be continuous in a ring shape, and may be fixed to the inside surface 20a while being interrupted. In this case, two or more of the interrupted surface fasteners 21 are preferably arranged so as to be distributed at equal intervals along the circumferential direction of the tire 2.
(3) The formation of the opening, the notch, and the slit may be omitted. In addition, as described above, the number, size, shape, interval, and position of the opening, the notch, and the slit can be set as appropriate. For example, the notch 400 may have a shape (a rectangular shape, a wedge shape, a trapezoidal shape, or a U-shape) as shown in FIGS. 7A to 7D, and a tip thereof is not necessarily required to be reach the width-directional center C1 unlike the example of FIG. 4. Further, as shown in FIGS. 8A to 8C, the shapes, sizes, and intervals of the notches 400 may be changed, or the formation of the notch 400 may be omitted, in order to adjust the rigidity of the body portion 40 at positions corresponding to the positions of the functional members 3A to 3H (the positions indicated by dashed lines). Further, the notch 400 is not necessarily required to extend along the width direction, and is simply required to extend along a direction intersecting the longer-side direction (the circumferential direction of the tire 2). This similarly applies to a case in which a slit is formed in the body portion 40.
(4) The fixing member (body portion) is not necessarily required to be formed in a ring shape, and may be formed as a strip-shaped member extending partially along the circumferential direction of the tire 2. That is, the body portion may have a shape formed by dividing the ring by an appropriate length. In this case, the tire assembly 1 may include one or a plurality of fixing members. Alternatively, a plurality of functional members may be fixed to such a fixing member, or a single functional member may be fixed to such a fixing member.

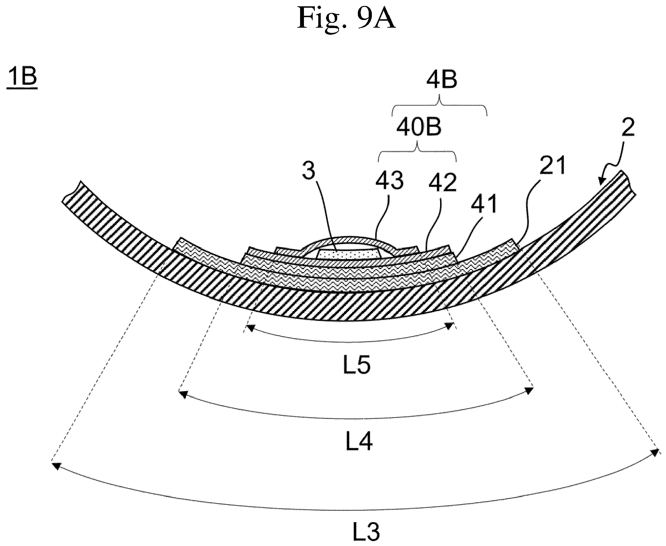

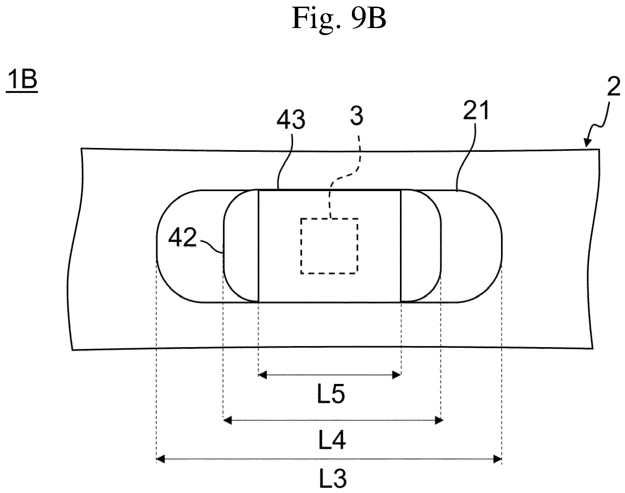

(5) FIG. 9A is a side cross-sectional view of a tire assembly 1B according to a variation, and FIG. 9B is a developed view of the tire assembly 1B. In the tire assembly 1B, a body portion 40B of a fixing member 4B is configured to sandwich and hold one or a plurality of functional members. More specifically, the body portion 40B includes a strip-shaped first body portion 42 disposed on the outer side in the radial direction of the tire 2 and a strip-shaped second body portion 43 disposed on the inner side in the radial direction of the tire 2. In the example of FIGS. 9A and 9B, the first body portion 42 and the second body portion 43 are at least partially fixed at their outer edge portions such that a space is formed at the central portion. In the space, a single electrical power generation device 3 is disposed so as to be sandwiched between the first body portion 42 and the second body portion 43. The electrical power generation device 3 may be fixed to at least one of the side of the first body portion 42 or the side of the second body portion 43. The first body portion 42 and the second body portion 43 can be formed of a material similar to that of the body portion 40 of the above embodiment. However, from a viewpoint of weight reduction and easy processability of the fixing member 4B, each of the first body portion 42 and the second body portion 43 is preferably formed of synthetic resin. Further, a strip-shaped surface fastener 41, serving as an attaching portion, is fixed on one surface of the first body portion 42 so as to cover the entire one surface of the first body portion 42. Meanwhile, similarly to the above embodiment, a surface fastener 21, which can be coupled to the surface fastener 41 as an attachment-receiving portion, is attached to the side of the tire 2 as the attachment-receiving portion. In the example of FIGS. 9A and 9B, the surface fastener 21 has a strip shape, and extends partially along the circumferential direction of the tire 2.

In the above configuration, a length L3 of the surface fastener 21 along the circumferential direction of the tire 2 is preferably longer than a length L4 of the surface fastener 41 along the circumferential direction of the tire 2. Further, in the above configuration, the length L4 is preferably longer than a length L5 of the second body portion 43 along the circumferential direction of the tire 2 (note that the electrical power generation device 3 is drawn in a magnified manner for its thickness in FIG. 9A). That is, the relative relationship of the lengths is preferably L5<L4<L3. This configuration facilitates reduction in weight of the fixing member 4B while facilitating attachment and detachment of the fixing member 4B to and from the surface fastener 21. However, the relative relationship of the lengths L3 to L5 is not limited to this, and may be, for example, L3=L4=L5, L5<L4=L3, or L5=L4<L3. The functional member may be a functional member other than the electrical power generation device 3.

### Examples

Experiments performed by the inventors and results thereof will be described below. However, the present invention is not limited to these experiments and results.

### <Experiment 1>

Tire assemblies (Examples 1 to 3) were prepared, each of which included a tire with a heat-resistant surface fastener stuck on the entire circumference of the inside surface, a fixing member, and electrical power generation devices 3I each including a first member and a second member. The same tires (the entire circumference of its inside surface: 1600 mm) were used in Examples 1 and 2. In Example 1, a body portion 40I of the fixing member was formed so as to have the entire circumference (1610 mm) longer than the entire circumference of the inside surface of the tire by approximately 0.6%. In Example 2, the body portion 40I of the fixing member was formed so as to have the entire circumference (1580 mm) shorter than the entire circumference of the inside surface of the tire by approximately 1.25%. In the tire assembly of Example 3, the tire having a diameter smaller than those of Examples 1 and 2 was used, and the body portion 40I of the fixing member was formed so as to have the entire circumference substantially equal to the entire circumference of the inside surface of the tire. That is, in the respective tire assemblies of Examples 1 and 3, each of the fixing members was attached over the entire circumference of the inside surface of the corresponding tire without any gap. In contrast, in the tire assembly of Example 2, the fixing member was attached to the inside surface of the tire with an allowance being left.

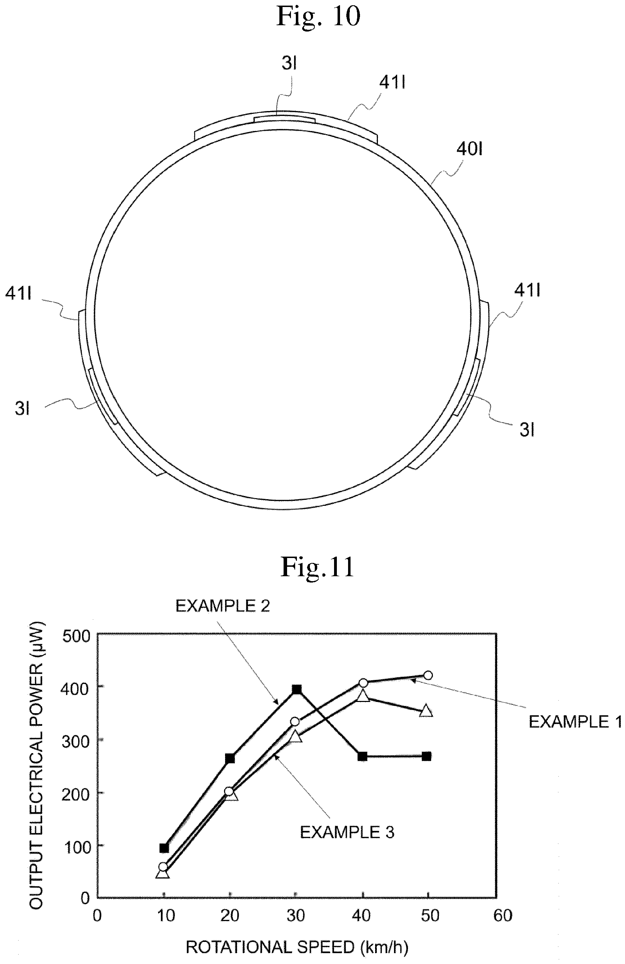

In each of Examples 1 to 3, the fixing member included a ring-shaped body portion 40I formed of polypropylene and three heat-resistant surface fasteners 41I fixed at substantially equal intervals on the outer circumferential surface of the body portion 40I. A large number of notches as shown in FIG. 4 were formed in the body portion 40I. The mass of each fixing member was 200 g or less. The mass of each of the electrical power generation devices 3I was 10 g or less. As shown in FIG. 10, each electrical power generation device 3I was fixed between a corresponding one of the surface fasteners 41I and the outer circumferential surface, and in total, three electrical power generation devices 3I were arranged at substantially equal intervals along the circumferential direction of the tire. The three electrical power generation devices 3I were connected to a voltage measurement device present at the outside, through lead wire (not shown). Each of the tire assemblies according to Examples 1 to 3 was attached to a wheel, was set to 250 kPa of air pressure, was mounted into a drum-type experiment device, was subjected to a wheel load of 2 kN, and was rotated at speed equivalent to 10 km/h to 50 km/h.

### <Result 1>

A resultant graph is shown in FIG. 11, which was obtained by plotting the total output electrical power (µW) of the electrical power generation devices 3I with respect to the rotational speeds (km/h) of the tire assemblies. As can be seen from FIG. 11, in a low-speed range (10 km/h to 30 km/h), the output electrical power of the tire assembly of Example 2 was the highest. However, in a speed range (40 km/h to 50 km/h) at which a vehicle normally travels, the output electrical power of the tire assemblies of Examples 1 and 3 became higher. From the result, when the tire assembly is mounted on a vehicle, it was confirmed to be more favorable to form the circumferential length of the fixing member equal to the circumferential length of the tire inside surface in terms of improving the electrical power generation amount.

### <Experiment 2>

A tire assembly according to Example 4 and a tire assembly according to Comparative Example 1 were prepared. The tire assembly according to Example 4 included a tire, a ring-shaped fixing member (expanded polypropylene, mass: 200 g), and a single electrical power generation device 3I. Respective heat-resistant surface fasteners were attached to the entire circumference of the inside surface of the tire and the entire circumference of the outer circumferential surface of the fixing member, and the fixing member was fixed to the tire by coupling these surface fasteners. The electrical power generation device 3I was attached between the outer circumferential surface of the fixing member and the surface fastener of the fixing member. The tire assembly according to Comparative Example 1 included a tire, a cover created from a tire repair patch (created by partially cutting off a portion of a patch MB-05 manufactured by Maruni Industry Co., Ltd. to have mass of approximately 60 g) for fixing a single electrical power generation device 3I, and the single electrical power generation device 3I. The tire was the same tire as that of Example 4, but the patch was attached at one position on the inside surface of the tire, instead of the surface fastener, and the electrical power generation device 3I was accommodated between the patch and the inside surface of the tire. Each of the tire assemblies according to Example 4 and Comparative Example 1 was attached to a wheel, was set to 250 kPa of air pressure, and was mounted into a corresponding one of two types of drum-type experiment devices having respective different drum diameters. Then, for each of the tire assemblies according to Example 4 and Comparative Example 1, the output electrical power (µW) of the electrical power generation device 3I was measured when the tire assembly was rotated while being subjected to a wheel load. The respective drum diameters of the drum-type experiment devices were 300 mm and 500 mm, the wheel load was 1 kN or 2 kN, and the rotational speed was equivalent to 30 km/h to 100 km/h or equivalent to 10 km/h to 50 km/h.

### <Result 2>

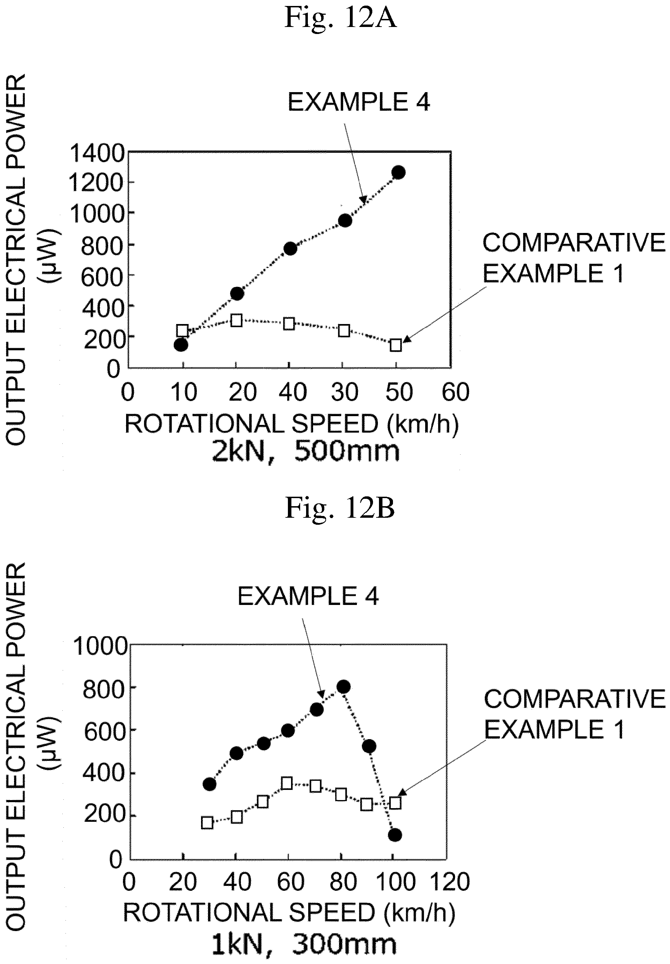

Resultant graphs are shown in FIGS. 12A and 12B, which were obtained under respective conditions by plotting the output electrical power (µW) of each electrical power generation device 3I with respect to the rotational speed (km/h) of the corresponding tire assembly. FIG. 12A is a graph under a condition in which the drum diameter was 500 mm, the wheel load was 2 kN, and the rotational speed was equivalent to 10 km/h to 50 km/h. FIG. 12B is a graph under a condition in which the drum diameter was 300 mm, the wheel load was 1 kN, and the rotational speed was equivalent to 30 km/h to 100 km/h. As can be seen from FIGS. 12A and 12B, it was confirmed that, under both conditions, the output electrical power (µW) was improved at most rotational speeds in the tire assembly according to Example 4 as compared with the tire assembly according to Comparative Example 1. This is considered to be because a force of pressing a first surface against a second surface further acts in the electrical power generation device 3I due to the fixing member being formed in a ring shape.

### <Experiment 3>

A tire assembly including a tire, a fixing member, seven electrical power generation devices 3I, and a single measurement circuit, which were arranged as shown in FIG. 1, was prepared to obtain a tire assembly according to Example 5. The tire assembly was attached to a wheel, was set to 250 kPa of air pressure, was mounted into a drum-type experiment device, was subjected to a wheel load of 2 kN, and was rotated at speed equivalent to 50 km/h, and the total output electrical power (µW) of the electrical power generation devices 3I was measured. Next, two electrical power generation devices 3I arranged at positions corresponding to the positions of the functional members 3F, 3G in FIG. 1 were removed to form a tire assembly according to Example 6 by reducing the number of electrical power generation devices 3I to five. Then, the same kind of measurement was performed for the tire assembly according to Example 6. Further, two electrical power generation devices 3I arranged at positions corresponding to the positions of the functional members 3D, 3E in FIG. 1 were removed to form a tire assembly according to Example 7 by reducing the number of electrical power generation devices 3I to three. Then, the same kind of measurement was performed for the tire assembly according to Example 7. Finally, two electrical power generation devices 3I arranged at positions corresponding to the positions of the functional members 3B, 3C in FIG. 1 were removed to form a tire assembly according to Example 8 by reducing the number of electrical power generation devices 3I to one. Then, the same kind of measurement was performed for the tire assembly according to Example 8.

### <Result3>

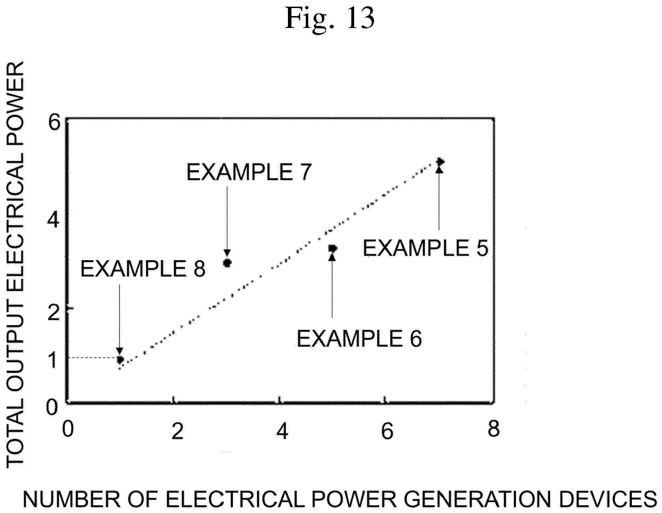

A resultant graph is shown in FIG. 13, which was obtained by plotting the total output electrical power, where the output electrical power of Example 8 is set to one, with respect to the number of electrical power generation devices 3I. From FIG. 13, it was confirmed that the output electrical power as the tire assembly increases in proportion to the number of electrical power generation devices 3I.

### Reference Signs List

- 1, 1B: Tire assembly
- 2: Tire
- 3, 3I: Electrical power generation device
- 3A to 3H: Functional member
- 4, 4B: Fixing member
- 20, 20a: Inside surface
- 21: Surface fastener
- 31: First member
- 32: Second member
- 40, 40B, 40I: Body portion
- 40a: Outer circumferential surface
- 41: Surface fastener

## Claims

1. A tire assembly (1, 1B) comprising:
a tire (2) including an attachment-receiving portion (21) on an inside surface (20, 20a) of the tire (2);
a fixing member (4,4B) including a body portion (40, 40B, 40I) extending along a circumferential direction of the tire (2), and an attaching portion (41, 41I) attachable to and detachable from the attachment-receiving portion (21); and
one or a plurality of functional members (3A, 3B, 3C, 3D, 3E, 3F, 3G, 3H) configured to be fixed to the fixing member (4,4B),
wherein the body portion (40, 40B, 40I) includes at least one of metal, synthetic resin, or rubber.

2. The tire assembly (1, 1B) according to claim 1,
wherein at least one of the one or plurality of functional members (3A, 3B, 3C, 3D, 3E, 3F, 3G, 3H) is disposed between the body portion (40, 40B, 40I) and the inside surface (20, 20a).

3. The tire assembly (1) according to claim 1 or 2,
wherein the body portion (40, 40I) is formed in a ring shape extending along an entire circumference of the tire (2).

4. The tire assembly (1, 1B) according to any one of claims 1 to 3,
wherein the one or plurality of functional members (3A, 3B, 3C, 3D, 3E, 3F, 3G, 3H) comprise a plurality of functional members (3A, 3B, 3C, 3D, 3E, 3F, 3G, 3H), and the plurality of functional members (3A, 3B, 3C, 3D, 3E, 3F, 3G, 3H) are provided, and
the plurality of functional members (3A, 3B, 3C, 3D, 3E, 3F, 3G, 3H) are arranged to cause total mass of the plurality of functional members (3A, 3B, 3C, 3D, 3E, 3F, 3G, 3H) to be distributed at equal intervals along the circumferential direction of the tire (2).

5. The tire assembly (1, 1B) according to any one of claims 1 to 4,
wherein each of the attachment-receiving portion (21) and the attaching portion (41, 41I) includes a surface fastener.

6. The tire assembly (1, 1B) according to claim 5,
wherein at least one of the one or plurality of functional members (3A, 3B, 3C, 3D, 3E, 3F, 3G, 3H) is disposed between the surface fastener and the body portion (40, 40B, 40I).

7. The tire assembly according to any one of claims 1 to 6,
wherein at least one of the one or plurality of functional members (3A, 3B, 3C, 3D, 3E, 3F, 3G, 3H) is an electrical power generation device (3, 3I) including a first member (31) and a second member (32),
the first member (31) includes a first insulating film (310) forming a first surface (3100),
the second member (32) includes a second insulating film (320) forming a second surface (3200), the second surface (3200) facing the first surface (3100) and being configured to come into contact with the first surface (3100),
the first member (31) and the second member (32) are configured to cause an area of real contact between the first surface (3100) and the second surface (3200) to change in accordance with pressure applied to the first member (31) and the second member (32), and
the first insulating film (310) and the second insulating film (320) are configured to cause one of the first insulating film (310) and the second insulating film (320) to be positively charged and to cause another one of the first insulating film (310) and the second insulating film (320) to be negatively charged, when the area of real contact is caused to change.

8. The tire assembly (1, 1B) according to claim 7,
wherein one of the first member (31) and the second member (32) is fixed to the surface fastener, and
another one of the first member (31) and the second member (32) is fixed to the body portion (40, 40B, 40I).

9. The tire assembly (1, 1B) according to any one of claims 1 to 8,
wherein at least one of an opening, a notch (400), or a slit is formed in the body portion (40, 40B, 40I).

10. The tire assembly (1, 1B) according to one of claims 4 to 9,
wherein at least one of the plurality of functional members (3A, 3B, 3C, 3D, 3E, 3F, 3G, 3H) is an electrical power generation device (3, 3I) including a first member (31) and a second member (32),
the first member (31) includes a first insulating film (310) forming a first surface (3100),
the second member (32) includes a second insulating film (320) forming a second surface (3200), the second surface (3200) facing the first surface (3100) and being configured to come into contact with the first surface (3100),
the first member (31) and the second member (32) are configured to cause an area of real contact between the first surface (3100) and the second surface (3200) to change in accordance with pressure applied to the first member (31) and the second member (32), and
the first insulating film (310) and the second insulating film (320) are configured to cause one of the first insulating film (310) and the second insulating film (320) to be positively charged and to cause another one of the first insulating film (310) and the second insulating film (320) to be negatively charged, when the area of real contact is caused to change.

11. The tire assembly (1B) according to one of claims 1 to 10,
wherein the body portion (40B) is a strip-shaped member extending partially along the circumferential direction.

12. The tire assembly (1B) according to claim 11,
wherein each of the attachment-receiving portion (21) and the attaching portion (41) includes a surface fastener.

13. The tire assembly (1B) according to claim 12,
wherein the body portion (40B) includes:
a first body portion (42) to which the attaching portion (41) is fixed, the first body portion (42) being disposed on an outer side in a radial direction of the tire (2); and
a second body portion (43) disposed on an inner side in the radial direction of the tire (2), and
the one or plurality of functional members (3A, 3B, 3C, 3D, 3E, 3F, 3G, 3H) are disposed between the first body portion (42) and the second body portion (43).

14. The tire assembly (1B) according to claim 13,
wherein a length of the attaching portion (41) along the circumferential direction is longer than a length of the second body portion (43) along the circumferential direction.

15. The tire assembly (1B) according to claim 14,
wherein a length of the attachment-receiving portion (21) along the circumferential direction is longer than the length of the attaching portion (41) along the circumferential direction.
